# EUROPÄISCHE PATENTSCHRIFT

(11) **EP 3 976 312 B1**
(45) Veröffentlichungstag und Bekanntmachung des Hinweises auf die Patenterteilung: **12.08.2026**
(21) Anmeldenummer: 20743055.4
(22) Anmeldetag: 25.05.2020
(51) Int. Cl.: B23Q 39/04, B27M 1/08, B23Q 7/14

(54) **FERTIGUNGSZELLE MIT HOHER AUSBRINGUNGSRATE**
PRODUCTION CELL HAVING HIGH YIELD RATE
CELLULE DE FABRICATION À CADENCE ÉLEVÉE

(30) Priorität: 27.05.2019 DE 102019003702
(43) Veröffentlichungstag der Anmeldung: 06.04.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000107
(87) Internationale Veröffentlichungsnummer: WO 2020/239154

(56) Entgegenhaltungen:
- EP-A1- 1 759 808
- EP-A1- 3 315 270
- DE-A1- 102017 012 077
- DE-A1- 102017 012 078

## Beschreibung

Die Erfindung betrifft eine Fertigungszelle mit mindestens einer, eine Stützvorrichtung und eine bewegliche Werkzeugeinheit aufweisenden Bearbeitungsstation und mit einer, ein Transportgleis aufweisenden Werkstücktransportvorrichtung, wobei die Werkstücktransportvorrichtung mindestens einen gleisgebundenen Werkstückwagen aufweist und wobei die Werkstücktransportvorrichtung ein Rückführgleis hat.

Aus der DE 10 2017 012 077 A1 ist eine derartige Fertigungszelle bekannt. Diese umfasst zwei Bearbeitungsroboter, die gleichzeitig ein Werkstück bearbeiten.

Die EP 3 315 270 A1 A1, auf der der Oberbegriff des Anspruchs 1 basiert, schlägt zur Erhöhung der Produktivität einer Fertigungszelle eine redundante Ausbildung der Werkzeugeinheiten an der einzigen Bearbeitungsstation sowie die zeitliche Überlappung der Fördervorgänge der Werkstücke an dieser Bearbeitungsstation vor.

Die EP 1 759 808 A1 offenbart eine flexible Fertigungszelle mit einem verfahrbaren Werkstücktisch und mit verfahrbaren Bearbeitungsrobotern. Beide Bearbeitungsroboter bearbeiten das Werkstück an einer einzigen Werkstückposition.

Der vorliegenden Erfindung liegt die Problemstellung zugrunde, die Produktivität einer Fertigungszelle hoher Flexibilität zu erhöhen.

Diese Problemstellung wird mit den Merkmalen des Hauptanspruches gelöst. Dazu umfasst die Fertigungszelle mindestens eine zweite, eine zweite Stützvorrichtung und eine zweite bewegliche Werkzeugeinheit aufweisende Bearbeitungsstation. Die erste Bearbeitungsstation und die zweite Bearbeitungsstation sind im Materialfluss in Reihe angeordnet. Außerdem koppelt das Transportgleis die erste Bearbeitungsstation und die zweite Bearbeitungsstation starr. Die Fertigungszelle hat einen in der Längsrichtung orientierten Schienentragkörper, auf dem ein Leitgitter, das Transportgleis und das Rückführgleis angeordnet sind und an dem die Stützvorrichtungen angeordnet sind. Jede Stützvorrichtung weist zumindest eine normal zur Längsrichtung verfahrbare Fixiereinheit auf. Die Fixiereinheit hat zwei normal zur Längsrichtung und parallel zum Leitgitter orientierte Anschlagleisten, die die der Transportschiene zugewandte Seite der Fixiereinheit begrenzen und Teil eines Haftbereichs sind. Außerdem sind im Haftbereich eine Vielzahl ausfahrbarer Saugnäpfe angeordnet.

Die Fertigungszelle hat mindestens zwei, im Materialfluss in Reihe angeordnete Bearbeitungsstationen. Ein gemeinsames Transportgleis verbindet beide Bearbeitungsstationen. Somit können zeitlich parallel zueinander - je nach Anzahl der Bearbeitungsstationen - zwei oder mehr Werkstücke bearbeitet werden. Hierbei können, beispielsweise bei einer mehrstufigen Fertigung, an den einzelnen Bearbeitungsstationen unterschiedliche, z.B. nacheinander folgende Bearbeitungsgänge durchgeführt werden. An jeder Bearbeitungsstation können an den einzelnen Werkstücken auftragsspezifische Bearbeitungen durchgeführt werden. Das an einer Bearbeitungsstation bearbeitete Werkstück wird dann z.B. getaktet an die nächste Bearbeitungsstation gefördert. Dort erfolgen die nächsten Bearbeitungsschritte.

Es ist auch denkbar, in einer einzelnen Bearbeitungsstation ein Werkstück komplett zu bearbeiten oder im Materialfluss für das einzelne Werkstück eine oder mehrere Bearbeitungsstationen auszulassen.

Bei einem Werkstück, das beispielsweise eine lange Bearbeitungszeit erfordert, kann beispielsweise mittels einer Werkstückrückführung erneut in den Materialfluss eingeschleust werden. Anschließend können weitere werkstückspezifische Arbeitsgänge an diesem Werkstück durchgeführt werden.

Weitere Einzelheiten der Erfindung ergeben sich aus den Unteransprüchen und der nachfolgenden Beschreibung schematisch dargestellter Ausführungsformen.
- Figur 1:: Isometrische Ansicht einer Fertigungszelle;
- Figur 2:: Stirnansicht einer Fertigungszelle ohne Roboter;
- Figur 3:: Querschnitt der Fertigungszelle im Bereich der Stützvorrichtung;
- Figur 4:: Werkstückwagen;
- Figur 5:: Rückseite der Fertigungszelle ohne Roboter;
- Figur 6:: Beispiel einer Werkstückentnahme;
- Figur 7:: Ansicht einer Fertigungszelle mit Werkstückumlauf;
- Figur 8:: Isometrische Darstellung der Figur 7 ohne Roboter;
- Figur 9:: Isometrische Teil-Rückansicht der Fertigungszelle aus Figur 8;
- Figur 10:: Detail der Figur 9.

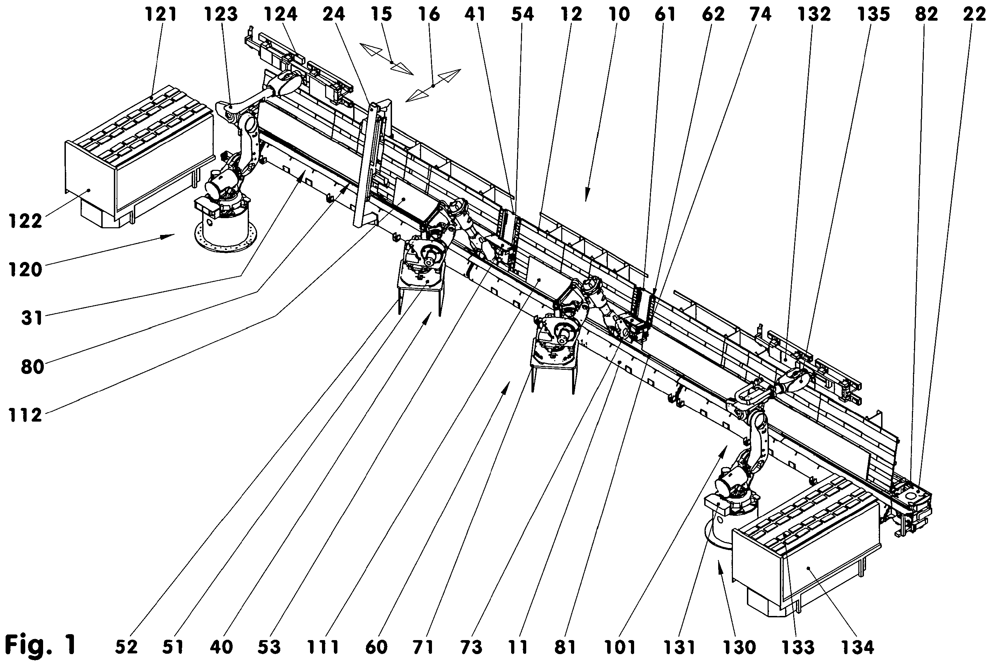

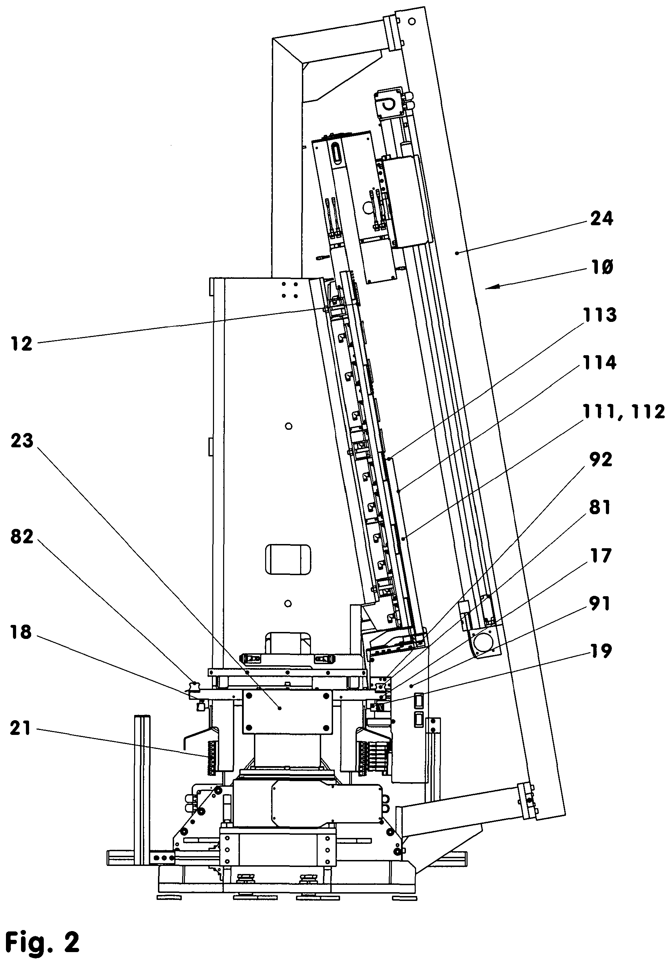

Die Figuren 1 bis 5 zeigen eine Fertigungszelle (10) und Einzelteile hiervon. Die Fertigungszelle (10) ist z.B. Teil eines flexiblen Fertigungssystems. Im flexiblen Fertigungssystem werden beispielsweise Werkstücke (111, 112) zur mehrstufigen Bearbeitung verschiedenen, nicht miteinander verketteten Stationen zugeführt. Nach Beendigung eines Arbeitsganges wird das einzelne Werkstück (111; 112) abhängig von der Reihenfolge und Art der werkstückspezifisch zur Bearbeitung erforderlichen Arbeitsgänge zur nächsten Fertigungszelle (10) oder Fertigungsstation gefördert. In einer Fertigungszelle (10) kann jedoch auch eine Komplettbearbeitung eines Werkstücks (111; 112) durchgeführt werden. Der einzelne Bearbeitungsvorgang kann z.B. ein Umformen, ein Trennen und/oder ein Fügen sein.

Die in der dargestellten Fertigungszelle (10) bearbeiteten Werkstücke (111, 112) sind platten- oder bretterartig ausgebildet. Der Werkstoff des Werkstücks (111, 112) kann Holz, Metall, ein Verbundwerkstoff, Glas, Kunststoff, etc. sein. Er kann über seine in der Längsrichtung (15) orientierte Länge einen konstanten Querschnitt haben. Es ist aber auch denkbar, ein z.B. vorbearbeitetes Werkstück, eine bereits gefügte Teilbaugruppe, etc. als Werkstück (111, 112) einzusetzen. Im Folgenden wird die Fertigungszelle (10) mit einer Holzplatte als Werkstück (111; 112) beschrieben. Diese Platte (111; 112) hat beispielsweise eine Länge von drei Metern, eine Breite von 600 Millimetern und eine Dicke von 25 Millimetern.

Die dargestellte Fertigungszelle (10) umfasst eine erste Bearbeitungsstation (40), eine zweite Bearbeitungsstation (60) und eine Werkstücktransportvorrichtung (80). Die beiden Bearbeitungsstationen (40, 60) sind im Materialfluss hintereinandergeschaltet. Mittels der Werkstücktransportvorrichtung (80) kann ein Werkstück (111; 112) von einem Einsetzbereich (31) zur ersten Bearbeitungsstation (40), zur zweiten Bearbeitungsstation (60) und in einen Entnahmebereich (101) gefördert werden. Das Werkstück (111; 112) wird hierfür in gleisgebundene Werkstückwagen (91) der Werkstücktransportvorrichtung (80) eingesetzt, die das Werkstück (111; 112) durch die Fertigungszelle (10) fördern. Die Fertigungszelle (10) kann auch mehr als zwei Bearbeitungsstationen (40, 60) aufweisen.

Die Fertigungszelle (10) hat einen in der Längsrichtung (15) orientierten Schienentragkörper (11), auf dem ein Leitgitter (12), ein Transportgleis (81) und ein Rückführgleis (82) angeordnet sind. Der Schienentragkörper (11) ist im Ausführungsbeispiel eine aus Stahlblechen gefügte Konstruktion. Er weist zwei Längsträger (13) auf, die mittels einer Vielzahl von Querblechen (14) verbunden sind. Ein erster, auf den Querblechen (14) angeordneter Längssteg (17) trägt das Transportgleis (81). Auf einem zweiten Längssteg (18) ist das Rückführgleis (82) angeordnet. Die beiden Längsstege (17, 18) sind parallel zueinander an den einander abgewandten Längsseiten des Schienentragkörpers (11) angeordnet.

Sowohl das Transportgleis (81), als auch das Rückführgleis (82) sind in der Längsrichtung (15) orientierte, gerade Schienen (81; 82) für Kugelumlaufschuhe (92). Sie haben ein identisches Querschnittsprofil. Unterhalb der Längsstege (17, 18) sind jeweils eine Zahnstange (19) und elektrische Leiterbahnen (21) angeordnet. An beiden Enden des Schienentragkörpers (11) sind Drehscheiben (22, 23) zur Überführung der Werkstückwagen (91) von der Transportschiene (81) auf die Rückführschiene (82) bzw. von der Rückführschiene (82) auf die Transportschiene (81) angeordnet. Anstatt der Drehscheiben (22, 23) ist auch eine Parallelverschiebung der Werkstückwagen (91) zwischen den Tragschienen (81, 82) denkbar. Auch eine umlaufende Schiene (81; 82) ist bei entsprechender Gestaltung der Schienenlagerungen der Werkstückwagen (91) denkbar.

Das Leitgitter (12) ist beispielsweise um einen Winkel von 10 Grad geneigt zu einer vertikalen Ebene angeordnet. Es kann aber auch vertikal angeordnet sein. Das Leitgitter (12) hat einen konstanten Abstand zur Transportschiene (81). In der Längsrichtung (15) ist es im Bereich von zwei Stützvorrichtungen (41, 61) unterbrochen. Beispielsweis begrenzt es den Arbeitsraum der Bearbeitungsstationen (40, 60) in einer Querrichtung (16).

Die einzelnen Werkstückwagen (91) sind beispielsweise identisch zueinander ausgebildet. Sie haben jeweils einen Kugelumlaufschuh (92), der die jeweilige Tragschiene (81; 82) umgreift. Unterhalb der Tragschiene (81; 82) haben die Werkstückwagen (91) jeweils ein motorgetriebenes Antriebsritzel (93), das mit der Zahnstange (19) kämmt. Für die Energiezufuhr hat der Werkstückwagen (91) beispielsweise Schleifkontakte (94), die die elektrischen Leiterbahnen (21) kontaktieren. Die Werkstückwagen (91) sind selbstfahrend ausgebildet.

Oberhalb der Tragschiene (81; 82) hat der einzelne Werkstückwagen (91) eine Werkstückaufnahme (95). Die Werkstückaufnahme (95) ist eine gerade Nut, in die ein Werkstück (111; 112) einsetzbar ist. In der Werkstückaufnahme (95) ist das einzelne Werkstück (111; 112) z.B. mittels einer Klemmvorrichtung (96) sicherbar.

Am Schienentragkörper (11) ist weiterhin eine Messstation (24) angeordnet. Beim Verfahren der mit einem Werkstück (111; 112) beladenen Werkstückwagen (91) wird beispielsweise mittels einer Lichtschranke und dem Weg- oder Geschwindigkeitssignal der Werkstückwagen (91) die Länge eines zu bearbeitenden Werkstücks (111; 112) ermittelt. An der Messstation (24) kann auch eine Werkstückfreigabe erfolgen.

Die einzelne Bearbeitungsstation (40; 60) umfasst jeweils eine am Schienentragkörper (11) angeordnete Stützvorrichtung (41; 61) und einen Bearbeitungsroboter (51; 71). Die einzelne Stützvorrichtung (41; 61) hat ein Gestell (42) und einen Querschlitten (43). Das Gestell (42) ist im Ausführungsbeispiel am Schienentragkörper (11) befestigt. Beispielsweise ist es mit diesem verschweißt.

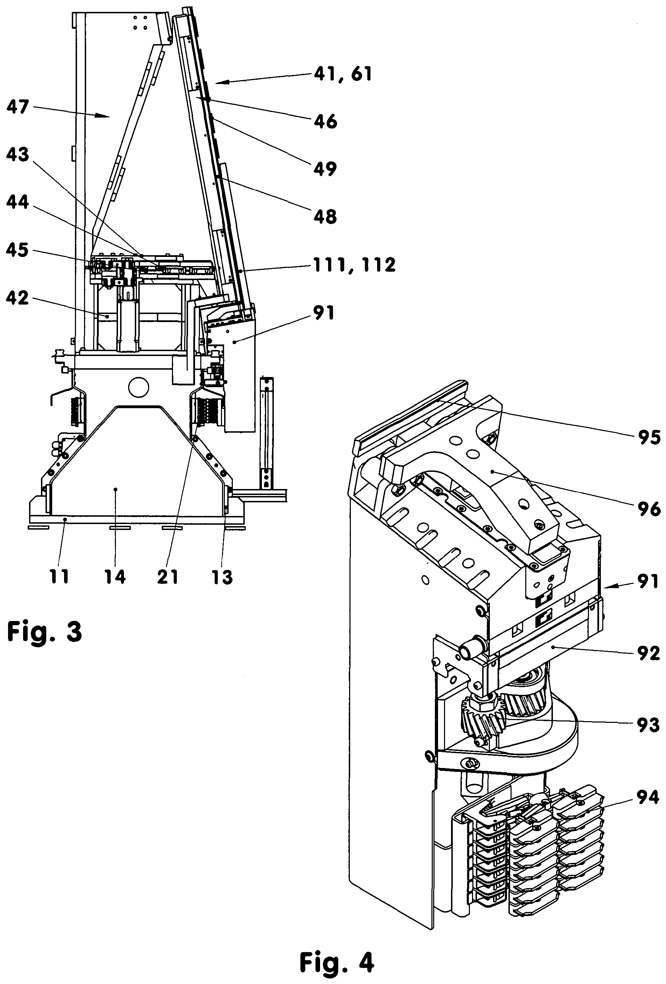

Der Querschlitten (43) sitzt auf dem Gestell (42). Im Ausführungsbeispiel ist er mittels Kugelumlaufschuhen (44) entlang gestellseitiger Führungsschienen (45) geführt. Diese Führungsschienen (45) sind in der Querrichtung (16) geführt. Der Querschlitten (43) trägt eine Fixiereinheit (46). Diese ist mittels des Querschlittens (43) zwischen einer Bereitschaftsposition, bei der der Querschlitten (43) beispielsweise in einer Betriebsendlage steht, in eine Arbeitslage (47) und zurück verfahrbar. In der Arbeitslage (47), vgl. Figur 3, liegt die Fixiereinheit (46) flächig haftend am Werkstück (111; 112) an. Anstatt eines Querschlittens (43) kann die Stützvorrichtung (41; 61) auch ein nichtumlaufendes Gelenkviereck, z.B. ein Parallelogramm, einen Schwenkarm, etc. zum Bewegen der Fixiereinheit (46) zwischen der Bereitschaftsposition und der Arbeitslage (47) haben.

Die Fixiereinheit (46) hat beispielsweise zwei normal zur Längsrichtung (15) und parallel zum Leitgitter (12) orientierte Anschlagleisten (48). Diese begrenzen die der Transportschiene (81) zugewandte Seite der Fixiereinheit (46). Die beiden Anschlagleisten (48) sind Teil eines Haftbereichs (62). In diesem Haftbereich (62) sind im Ausführungsbeispiel eine Vielzahl von z.B. ausfahrbaren Saugnäpfen (49) angeordnet. Die Saugnäpfe (49) können hierbei alle gemeinsam, zeilenweise oder einzeln verfahrbar angesteuert sein. Sind alle Saugnäpfe (49) eingefahren oder sind alle Saugnäpfe (49) ausgefahren, ist ihre Hüllkontur beispielsweise jeweils eine Ebene.

Die Saugnäpfe (49) sind z.B. pneumatisch mit einer Pumpe verbunden, die den anliegenden Druck vermindert, sodass in der Arbeitslage (47) der Fixiereinheit (46) der Druck zwischen dem einzelnen Saugnapf (49) und dem Werkstück (111; 112) geringer ist als der Umgebungsdruck. Ein an den Anschlagleisten (48) anliegendes Werkstück (111; 112) wird angezogen und fixiert. Um das Werkstück (111; 112) z.B. nach einer Bearbeitung wieder freizugeben, wird der Druck in den Saugnäpfen (49) z.B. auf den Umgebungsdruck erhöht.

Anstatt der Saugnäpfe (49) können beispielsweise bei der Bearbeitung magnetisierbarer Werkstoffe Elektromagnete eingesetzt werden. Zum Halten des Werkstücks (111; 112) werden diese bestromt. Zum Lösen des Werkstücks (111; 112) von der Fixiereinheit (46) werden die Elektromagnete abgeschaltet.

Der einzelne Bearbeitungsroboter (51; 71) steht mit einem Sockel (52) auf dem Hallenboden. Er trägt eine Werkzeugeinheit (53; 73), die relativ zu der Transportschiene (81) mehrachsig schwenkbar und verfahrbar ist. Die einzelne Werkzeugeinheit (53; 73) hat mehrere angetriebene Werkzeuge (54; 74). Dies sind z.B. Fräs-, Bohr- und Sägewerkzeuge. Die Werkzeugeinheit (53) des ersten Bearbeitungsroboters (51) kann andere Werkzeuge (54) aufweisen als die Werkzeugeinheit (73) des zweiten Bearbeitungsroboters (71). Auch die Kinematik der Bearbeitungsroboter (51; 71) kann unterschiedlich ausgebildet sein.

In der Darstellung der Figur 1 umfasst die Fertigungszelle (10) eine Werkstückbeschickung (120). Das einzelne Werkstück (111; 112) wird beispielsweise in einem Stapelmagazin (121) bereitgestellt. Das einzelne Werkstück (111; 112) liegt hierbei z.B. flach auf dem Stapel zu bearbeitender Werkstücke (111; 112). Es ist auch denkbar, dass die zu bearbeitenden Werkstücke (111; 112) senkrecht im Magazin stehen. Das Stapelmagazin (121) ist im Ausführungsbeispiel auf einem Gestell (122) gelagert. Dieses kann auf dem Hallenboden feststehend sein oder transportabel ausgebildet sein. Es ist aber auch denkbar, die Werkstücke (111; 112) auf einem Transportwagen bereitzustellen.

Neben dem Stapelmagazin (121) und neben dem Schienentragkörper (11) steht ein Beschickungsroboter (123) auf dem Hallenboden. Der Beschickungsroboter (123) hat eine Werkstück-Greifvorrichtung (124). Diese ist relativ zur Transportschiene (81) schwenkbar und verfahrbar ausgebildet. Die Werkstück-Greifvorrichtung (124) kann das zu bearbeitende Werkstück (111; 112) pneumatisch und/oder mechanisch greifen. Beispielsweise vor dem Greifen oder beim Greifen werden zwei Referenzkanten des Werkstücks (111; 112) ermittelt. Dies kann optisch und/oder mittels mechanischer Anlage erfolgen.

Die in der Figur 1 dargestellte Fertigungszelle (10) hat außerdem eine Werkstückentnahmevorrichtung (130). Diese umfasst im Ausführungsbeispiel einen Entnahmeroboter (131). Der Entnahmeroboter (131) ist ähnlich aufgebaut wie der Beschickungsroboter (123). Die in der Fertigungszelle (10) bearbeiteten Werkstücke (111; 112) werden mittels des Entnahmeroboters (131) aus dem Arbeitsraum entnommen und z.B. auf einem Stapel (133) abgelegt. Zum Greifen des Werkstücks (111; 112) verfügt der Entnahmeroboter (131) beispielsweise über eine Greifvorrichtung (132), z.B. einen Zwei-Backen-Parallelgreifer. Dieser hat beispielsweise zwei Stahlbacken mit Kunststoffeinsätzen, die jeweils einen Hub von 13 Millimetern haben. Die Schließkraft beträgt z.B. 1920 Newton.

Das oberste im Stapelmagazin (121) zur Bearbeitung bereitgestellte Werkstück (111; 112) wird mittels der Werkstück-Greifvorrichtung (124) des Beschickungsroboters (123) aufgenommen. Das Werkstück (111; 112) wird zumindest zweiachsig geschwenkt und im Einsetzbereich (31) im vorgegebenen Winkel zu einer Vertikalebene in z.B. zwei bereitstehende Werkstückwagen (91) eingesetzt.

Es ist auch denkbar, die zu bearbeitenden Werkstücke (111; 112) getaktet einzeln oder in kleinen Losen in den Aufnahmebereich des Beschickungsroboters (123) zu fördern. Damit kann die Kopplung der Fertigungszelle (10) mit den im Materialfluss vorhergehenden Fertigungsstationen beeinflusst werden. Die Fertigungszelle (10) kann auch mittels Gleisen mit einer vorangehenden Fertigungsstation verbunden sein. Die Werkstücke (111; 112) können dann z.B. bereits auf Werkstückwagen (91) an die Fertigungszelle (10) gefördert werden.

Nach dem Einsetzen in die Werkstückaufnahmen (95) wird das Werkstück (111; 112) z.B. durch automatisches Betätigen der Klemmvorrichtung (96) gesichert. Die selbstfahrenden Werkstückwagen (91) verfahren zusammen mit dem Werkstück (111; 112) zu der der Beschickung im Materialfluss nachgeschalteten Messstation (24). Hier kann außer der oben beschriebenen Längenmessung auch eine Höhen- und/oder eine Dickenmessung des Werkstücks (111; 112) durchgeführt werden.

Sobald die der Messstation (24) im Materialfluss nachgeschaltete erste Bearbeitungsstation (40) frei ist, wird das erste Werkstück (111) mittels der Werkstückwagen (91) in den Arbeitsbereich des ersten Bearbeitungsroboters (51) verfahren. Die Fixiereinheit (46) der ersten Stützvorrichtung (41) wird zur Anlage an das erste Werkstück (111) verschoben und am ersten Werkstück (111) fixiert. Die Fixiereinheit (46) steht jetzt in der Arbeitslage (47). Die Stützvorrichtung (41) stützt nun während der nachfolgenden Bearbeitung an der ersten Bearbeitungsstation (40) das erste Werkstück (111) ab.

Zur Bearbeitung dieses ersten Werkstücks (111) schwenkt und/oder verfährt der erste Bearbeitungsroboter (51) die werkzeugbestückte Werkzeugeinheit (53) an das erste Werkstück (111). Falls im Werkstück (111) Durchgangsbohrungen vorgesehen sind, können die dahinterliegenden Saugnäpfe (49) zurückgefahren werden. Nach Beendigung der Bearbeitung des ersten Werkstücks (111) an der ersten Bearbeitungsstation (40) werden die Werkzeugeinheit (53) und die Stützvorrichtung (41) in ihre jeweiligen Ausgangslagen zurückgefahren. Beispielsweise wird die erste Stützvorrichtung (41) in ihre Bereitschaftslage zurückverfahren. Die Werkstückwagen (91) verfahren das Werkstück (111) an die zweite Bearbeitungsstation (60).

Die Bearbeitung des ersten Werkstücks (111) an der zweiten Bearbeitungsstation (60) erfolgt analog zur Bearbeitung dieses Werkstücks (111) an der ersten Bearbeitungsstation (40). An dieser zweiten Bearbeitungsposition (60) werden z.B. weitere Einsenkungen in das erste Werkstück (111) eingebracht, Beschläge gefügt, etc. Die Durchführzeit der Arbeitsgänge an der zweiten Bearbeitungsstation (60) entspricht beispielsweise weitgehend der Durchführzeit der Arbeitsgänge an diesem Werkstück (111) an der ersten Bearbeitungsstation (40). Als Durchführzeit an der einzelnen Bearbeitungsstation (40; 60) ist hier das Zeitintervall zwischen dem Beginn des ersten Werkzeugeinsatzes des Bearbeitungsroboters (51; 71) bis zur Beendigung des letzten Werkzeugeinsatzes dieses Bearbeitungsroboters (51; 71) am einzelnen Werkstück (111; 112) bezeichnet.

Während der Bearbeitung des ersten Werkstücks (111) an der ersten Bearbeitungsstation (40) wird z.B. mittels des Beschickungsroboters (123) ein zweites Werkstück (112) im Einsetzbereich (31) bereitgestellt. Sobald das erste Werkstück (111) aus der ersten Bearbeitungsstation (40) in die mit dieser z.B. pufferlos gekoppelten zweiten Bearbeitungsstation (60) verfahren wird, wird das zweite Werkstück (112) zur Bearbeitung freigegeben und an die erste Bearbeitungsstation (40) gefördert.

Die Bearbeitung des zweiten Werkstücks (112) an der ersten Bearbeitungsstation (40) erfolgt analog zur Bearbeitung des ersten Werkstücks (111) an dieser Bearbeitungsstation (40). Hierbei können die bei beiden Werkstücken (111; 112) angewendeten Arbeitsgänge und Werkzeuge (54; 74) unterschiedlich sein. Beispielsweise ist die Durchführzeit der am zweiten Werkstück (112) durchgeführten Arbeitsgänge an der ersten Bearbeitungsstation (40) zumindest annähernd gleich der Durchführzeit der am ersten Werkstück (111) an der zweiten Bearbeitungsstation (60) durchgeführten Arbeitsgänge. Zumindest annähernd bedeutet hier, dass die Durchführzeiten sich um maximal 10 % unterscheiden.

Nach Beendigung der Bearbeitung des ersten Werkstücks (111) an der zweiten Bearbeitungsstation (60) wird das erste Werkstück (111) mittels der Werkstückwagen (91) in den Entnahmebereich (101) gefördert. Das zweite Werkstück (112) wird zur zweiten Bearbeitungsstation (60) gefördert. Die Bearbeitung des zweiten Werkstücks (112) an der zweiten Bearbeitungsstation (60) erfolgt, wie oben beschrieben. Die für die Bearbeitung des zweiten Werkstücks (112) eingesetzten Werkzeuge (74) der zweiten Werkzeugeinheit (73) können sich von den für das erste Werkstück (111) eingesetzten Werkzeugen (74) dieser Werkzeugeinheit (73) unterscheiden. Beispielsweise entspricht die Durchführzeit der zweiten Bearbeitungsstation (60) zur Bearbeitung des zweiten Werkstücks (112) zumindest annähernd der für das erste Werkstück (111) eingesetzten Durchführzeit.

Damit werden im Ausführungsbeispiel die Werkstücke (111; 112) getaktet bearbeitet und mit weitgehend gleichbleibender Frequenz ausgegeben. Die Ausbringungsrate, das ist die Anzahl fertiggestellter Werkstücke (111; 112) pro Zeiteinheit, unterliegt damit weitgehend einer Gleichverteilung, z.B. einer DIRAC-Verteilung.

Es ist auch denkbar, Durchführzeiten unterschiedlicher Länge an den einzelnen Bearbeitungsstationen (40; 60) vorzusehen. Beispielsweise hat dann abwechselnd die erste Bearbeitungsstation (40) oder die zweite Bearbeitungsstation (60) eine längere Durchführzeit als die jeweilige andere Bearbeitungsstation (60; 40). Die Ausbringungsrate kann z.B. geringfügig gegenüber dem oben genannten Ausführungsbeispiel verändert sein. Die Schwankungsbreite der Ausbringungsrate ist erhöht.

Das einzelne Werkstück (111; 112) kann auch an einer der Bearbeitungsstationen (40; 60) vollständig bearbeitet werden. In diesem Fall werden jeweils zwei Werkstücke (111; 112) bereitgestellt. Die Durchführzeit für das einzelne Werkstück (111; 112) ist beispielsweise an beiden Bearbeitungsstationen (40, 60) gleich. Die Ausbringungsrate entspricht in diesem Fall der im Zusammenhang mit dem ersten Ausführungsbeispiel beschriebenen Ausbringungsrate.

Nach abgeschlossener Bearbeitung wird das einzelne Werkstück (111; 112) mittels des Entnahmeroboters (131) entnommen. Dieser greift mittels der Greifvorrichtung (132) das Werkstück (111; 112) am oberen Rand (113), schwenkt es und legt es z.B. auf einen Transportwagen (134) ab. Die fertigbearbeiteten Werkstücke (111; 112) können entweder einzeln oder losweise weitergefördert werden.

Die leeren Werkstückwagen (91) verfahren vom Entnahmebereich (101) weiter entlang der Transportschiene (81) und gelangen beispielsweise einzeln auf eine erste Drehscheibe (22). Hier werden sie z.B. angehalten. Die Drehscheibe (22) schwenkt um 180 Grad, sodass der einzelne Werkstückwagen (91) auf die rückseitige Rückführschiene (82) fahren kann. Der gleiche Vorgang erfolgt für die nachfolgenden Werkstückwagen (91). Die Werkstückwagen (91) verfahren nun entlang der Rückführschiene (82) bis zur zweiten Drehscheibe (23), die sich in der Nähe des Einsetzbereichs (31) befindet. Hier werden die Werkstückwagen (91) wieder auf die Transportschiene (81) umgelenkt. Im Einsetzbereich (31) können sie dann mit neuen zu bearbeitenden Werkstücken (111; 112) bestückt werden. Beispielsweise sind in der Fertigungszelle (10) bis zu 18 Werkstückwagen (91) im Umlauf.

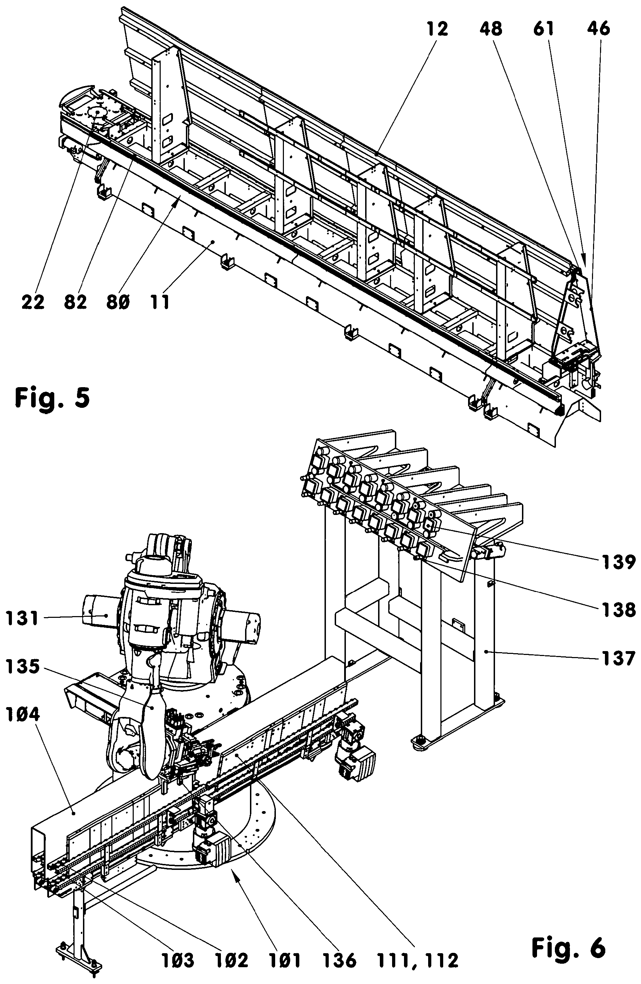

Die Figur 6 zeigt eine Variante des Entnahmebereichs (101) mit einer Werkstückentnahmevorrichtung (130). Das einzelne Werkstück (111; 112) steht senkrecht in den Werkstückwagen (91), die auf der Transportschiene (81) stehen. Oberhalb der Werkstückwagen (91) ist das Werkstück (111; 112) in zwei einander gegenüberliegenden Rollenbahnen (102, 103) geführt. Die Rückführschiene (82) verläuft unter einer Abdeckung (104).

Die Entnahmeroboter (131) steht hinter der Rückführschiene (82). Ein Roboterarm (135) übergreift die Abdeckung (104). Er trägt eine an seinem Roboterarm (135) angeordnete Greifvorrichtung (132). Diese Greifvorrichtung (132) hat beispielsweise zwei hintereinander angeordnete Klemmbackenpaare (136). Diese sind beispielsweise so ausgebildet, wie oben beschrieben. Weiterhin kann der Entnahmeroboter (131) eine Werkzeugeinheit zur Werkstückbearbeitung aufweisen.

Die im Entnahmebereich (101) entnommenen Werkstücke (111; 112) werden an einem Haltegestell (137) abgelegt. Dieses hat eine schräg angeordnete Haltefläche (138) mit einer Vielzahl von Saugnäpfen (139). Das einzelne, am Haltegestell (137) zwischengelagerte Werkstück (111; 112) kann dann mittels eines weiteren Fördermittels an die nächste Fertigungsstelle gefördert werden.

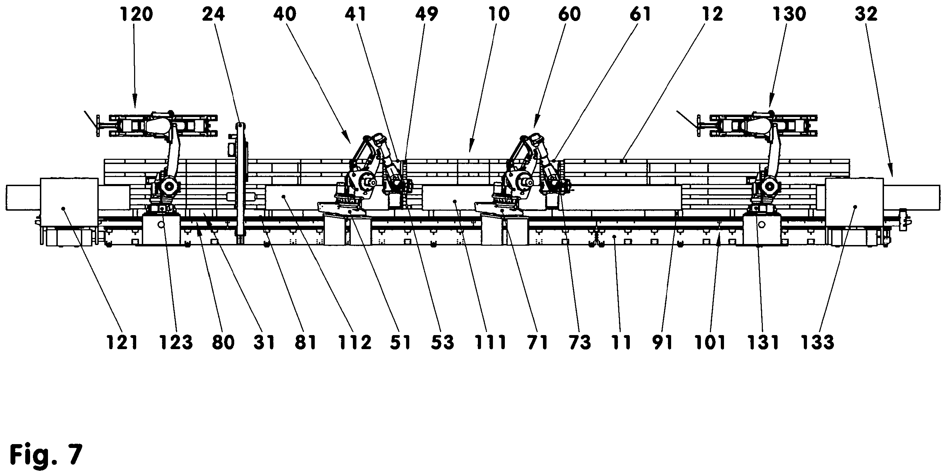

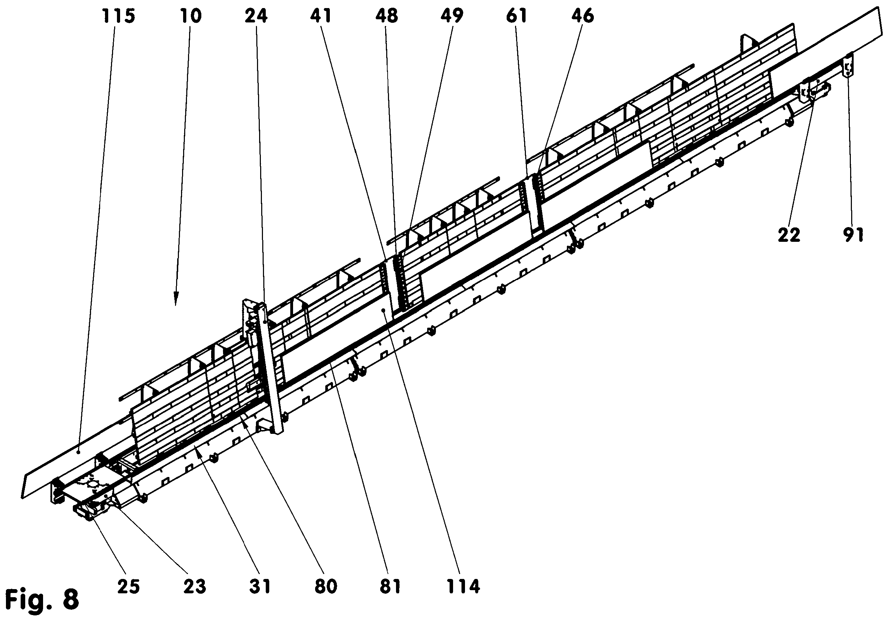

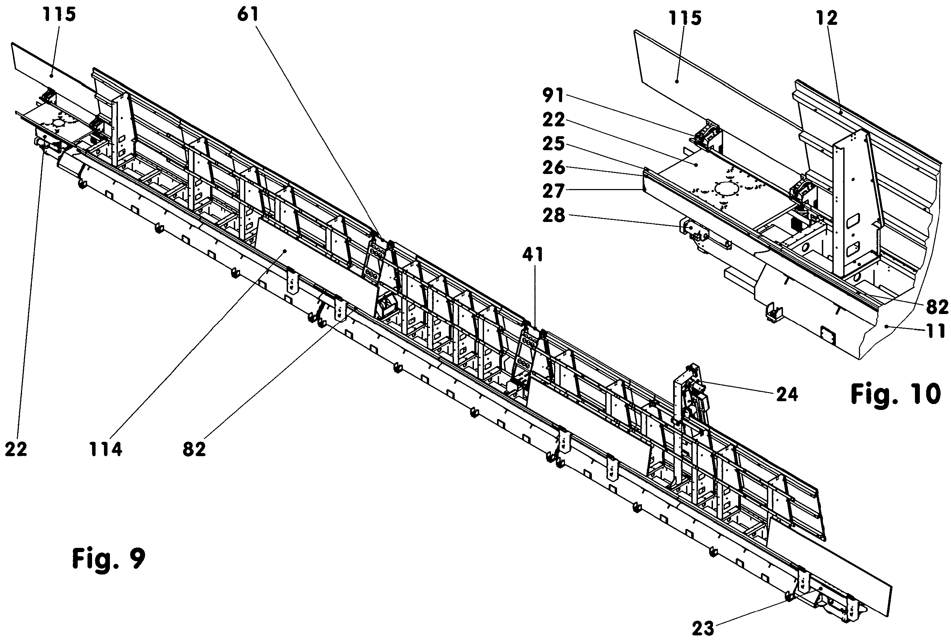

Die Figuren 7 bis 10 zeigen eine Fertigungszelle (10) mit einer Werkstückrückführung (32). Die Fertigungszelle (10) ist weitgehend so aufgebaut, wie die im Zusammenhang mit dem ersten Ausführungsbeispiel dargestellte Fertigungszelle (10). Auch die in den Figuren 7 bis 10 dargestellte Fertigungszelle (10) hat zwei in Reihe angeordnete, starr und pufferlos miteinander gekoppelte Bearbeitungsstationen (40, 60). Der ersten Bearbeitungsstation (40) ist im Materialfluss eine Messstation (24) und eine Werkstückbeschickung (120) vorgeschaltet. Der zweiten Bearbeitungsstation (60) ist im Materialfluss eine Werkstückentnahmevorrichtung (130) nachgeschaltet. Die Werkstückbeschickung (120) und die Entnahmevorrichtung (130) sind beispielsweise so aufgebaut, wie im Zusammenhang mit dem ersten Ausführungsbeispiel beschrieben. Auch der Materialfluss der einzelnen Werkstücke (111; 112) kann wie oben beschrieben erfolgen.

Ist an einem Werkstück (111; 112) ein erhöhter Bearbeitungsaufwand erforderlich - dies kann z.B. eine Bearbeitung der Vorderseite (114) und der Rückseite (115) des Werkstücks (111; 112) sein, wird der Materialfluss abgeändert.

Das beidseitig zu bearbeitende Werkstück (111; 112) wird auch in diesem Ausführungsbeispiel mittels des Beschickungsroboters (123) z.B. von einem Transportwagen (122) entnommen und im Einsetzbereich (31) auf die Werkstückwagen (91) aufgesetzt.

Nach dem Passieren der Messstation (24) gelangt nach der Freigabe das Werkstück (111; 112) zur ersten Bearbeitungsstation (40) und/oder zur zweiten Bearbeitungsstation (60). Nach dem Verlassen der zweiten Bearbeitungsstation (60) fördern die Werkstückwagen (91) das Werkstück (111; 112) durch den Entnahmebereich (101) hindurch auf eine Drehscheibe (22). Diese Drehscheibe (22) hat z.B. zwei zueinander parallele, gerade Drehscheibenschienen (25). Die Drehscheibe (22) kann auch eine einzige Drehscheibenschiene (25) aufweisen. Die Länge dieser Drehscheibenschienen (25) ist länger als die Gesamtlänge aller ein Werkstück (111; 112) tragender Werkstückwagen (91). Im Ausführungsbeispiel beträgt die Länge der Drehscheibenschiene (25) zwischen 600 Millimetern und 2500 Millimetern. Unterhalb der Drehscheibenschienen (25) hat die Drehscheibe (22) jeweils ein Zahnstangensegment (26) und elektrische Leiterbahnen (27). Die Versorgung der elektrischen Leiterbahnen (27) erfolgt beispielsweise durch eine zentrale Drehdurchführung. Für den Drehantrieb ist ein Elektromotor (28) vorgesehen.

Sobald alle das Werkstück (111; 112) tragende Werkstückwagen (91) auf die Drehscheibe (22) aufgefahren sind und z.B. angehalten haben, schwenkt die Drehscheibe (22) mit dem Werkstück (111; 112) um 180 Grad. Anstatt einer Drehscheibe (22) kann auch in diesem Ausführungsbeispiel eine Schiebevorrichtung eingesetzt werden. Die Schwenk- oder Verfahrbewegung ist beendet, wenn die Drehscheibenschiene (25) mit der Rückführschiene (82) fluchtet.

Nach dem Schwenken verfahren die Werkstückwagen (91) das Werkstück (111; 112) von der Drehscheibe (22) auf die Rückführschiene (82) und weiter entlang der Rückführschiene (82). Gegebenenfalls kann entlang der Rückführschiene (82) eine oder es können mehrere zusätzliche Bearbeitungsstationen (40; 60) angeordnet sein. Am Ende der Rückführschiene (82) ist eine zweite Drehscheibe (23) angeordnet. Diese ist beispielsweise so aufgebaut wie die erste Drehscheibe (22). Das Werkstück (111; 112) wird mittels der Drehscheibe (23) um 180 Grad geschwenkt und mittels der Werkstückwagen (91) in den Einsetzbereich (31) gefördert. Hier kann das Werkstück (111; 112) z.B. wieder in den Materialfluss zur ersten Bearbeitungsstation (40) eingeschleust werden. Es kann aber auch mittels des Beschickungsroboters (123) aus den Werkstückwagen (91) entnommen werden und geschwenkt werden. Danach wird es wieder in die Werkstückwagen (91) eingesetzt, sodass nun die Vorderseite (114) zum Leitgitter (12) zeigt. Das Werkstück (111; 112) kann jetzt z.B. auf der Rückseite (115) bearbeitet werden, wie oben beschrieben. Die Entnahme des beidseitig bearbeiteten Werkstücks (111; 112) erfolgt dann beispielsweise mittels des Entnahmeroboters (131).

Es ist auch denkbar, das Umdrehen des Werkstücks (111; 112) mittels des Entnahmeroboters (131) durchzuführen. Damit gelangt das Werkstück (111; 112) dann bereits seitenrichtig in den Einsetzbereich (31). Bei einem Umsetzen mittels des Entnahmeroboters (131) und einer oder mehrerer Bearbeitungsstationen (40; 60) entlang der Rückführschiene (82) kann der Beschickungsroboter (123) das beidseitig bearbeitete Werkstück (111; 112) entnehmen und der Weiterverarbeitung zuführen.

Es ist auch denkbar, den Entnahmeroboter (131) z.B. für die beidseitig bearbeiteten Teile am Ende der Rückführschiene (82) anzuordnen. In diesem Fall kann die zweite Drehscheibe (23) so ausgebildet sein, wie im Zusammenhang mit dem ersten Ausführungsbeispiel beschrieben. Die Transportmittel (91) verfahren auch in diesem Fall im Rundverkehr.

### Bezugszeichenliste:

- 10: Fertigungszelle
- 11: Schienentragkörper
- 12: Leitgitter
- 13: Längsträger
- 14: Querbleche
- 15: Längsrichtung
- 16: Querrichtung
- 17: Längsstege, erster Längssteg
- 18: Längsstege, zweiter Längsstege
- 19: Zahnstange

- 21: elektrische Leiterbahnen
- 22: Drehscheibe, erste Drehscheibe
- 23: Drehscheibe, zweite Drehscheibe
- 24: Messstation
- 25: Drehscheibenschienen
- 26: Zahnstangensegment
- 27: elektrische Leiterbahnen
- 28: Elektromotor

- 31: Einsetzbereich
- 32: Werkstückrückführung

- 40: Bearbeitungsstation, erste Bearbeitungsstation
- 41: Stützvorrichtung
- 42: Gestell
- 43: Querschlitten
- 44: Kugelumlaufschuhe
- 45: Führungsschienen
- 46: Fixiereinheit
- 47: Arbeitslage
- 48: Anschlagleisten
- 49: Saugnäpfe

- 51: Bearbeitungsroboter, erster Bearbeitungsroboter
- 52: Sockel
- 53: Werkzeugeinheit
- 54: Werkzeuge

- 60: Bearbeitungsstation, zweite Bearbeitungsstation
- 61: Stützvorrichtung
- 62: Haftbereich

- 71: Bearbeitungsroboter
- 73: Werkzeugeinheit
- 74: Werkzeuge

- 80: Werkstücktransportvorrichtung
- 81: Transportgleis, Transportschiene, Tragschiene
- 82: Rückführgleis, Rückführschiene, Tragschiene

- 91: Werkstückwagen, Transportmittel
- 92: Kugelumlaufschuhe
- 93: Antriebsritzel
- 94: Schleifkontakte
- 95: Werkstückaufnahme
- 96: Klemmvorrichtung

- 101: Entnahmebereich
- 102: Rollenbahn
- 103: Rollenbahn
- 104: Abdeckung

- 111: Werkstück, erstes Werkstück, Platte
- 112: Werkstück, zweites Werkstück, Platte
- 113: oberer Rand von (111; 112)
- 114: Vorderseite
- 115: Rückseite

- 120: Werkstückbeschickung
- 121: Stapelmagazin
- 122: Gestell, Transportwagen
- 123: Beschickungsroboter
- 124: Werkstück-Greifvorrichtung

- 130: Werkstückentnahmevorrichtung
- 131: Entnahmeroboter
- 132: Greifvorrichtung
- 133: Stapel
- 134: Transportwagen
- 135: Roboterarm
- 136: Klemmbackenpaare
- 137: Haltegestell
- 138: Haltefläche
- 139: Saugnäpfe

## Patentansprüche

1. Fertigungszelle (10) mit mindestens einer, eine Stützvorrichtung (41; 61) und eine bewegliche Werkzeugeinheit (53; 73) aufweisenden Bearbeitungsstation (40; 60) und mit einer, ein Transportgleis (81) aufweisenden Werkstücktransportvorrichtung (80), wobei die Werkstücktransportvorrichtung (80) mindestens einen gleisgebundenen Werkstückwagen (91) aufweist und wobei die Werkstücktransportvorrichtung (80) ein Rückführgleis (82) hat, wobei
- die Fertigungszelle (10) mindestens eine zweite, eine zweite Stützvorrichtung (61; 41) und eine zweite bewegliche Werkzeugeinheit (73; 53) aufweisende Bearbeitungsstation (60; 40) umfasst
- die erste Bearbeitungsstation (40) und die zweite Bearbeitungsstation (60) im Materialfluss in Reihe angeordnet sind und
- das Transportgleis (81) die erste Bearbeitungsstation (40) und die zweite Bearbeitungsstation (60) starr koppelt,
- die Fertigungszelle (10) einen in der Längsrichtung (15) orientierten Schienentragkörper (11) hat, auf dem ein Leitgitter (12), das Transportgleis (81) und das Rückführgleis (82) angeordnet sind und an dem die Stützvorrichtungen (41, 61) angeordnet sind,
**dadurch gekennzeichnet,**
- **dass** jede Stützvorrichtung (41; 61) zumindest eine normal zur Längsrichtung (15) verfahrbare Fixiereinheit (46) aufweist,
- **dass** die Fixiereinheit (46) zwei normal zur Längsrichtung (15) und parallel zum Leitgitter (12) orientierte Anschlagleisten (48) hat, die die der Transportschiene (81) zugewandte Seite der Fixiereinheit (46) begrenzen und Teil eines Haftbereichs (62) sind und
- **dass** im Haftbereich (62) eine Vielzahl ausfahrbarer Saugnäpfe (49) angeordnet sind.

2. Fertigungszelle (10) nach Anspruch 1, **dadurch gekennzeichnet, dass** die Bearbeitungsstationen (40, 60) pufferlos miteinander gekoppelt sind.

3. Fertigungszelle (10) nach Anspruch 1, **dadurch gekennzeichnet, dass** jede Werkzeugeinheit (53; 73) Teil eines Bearbeitungsroboters (51; 71) ist.

4. Fertigungszelle (10) nach Anspruch 1, **dadurch gekennzeichnet, dass** der ersten Bearbeitungsstation (40) im Materialfluss ein Beschickungsroboter (123) vorgeschaltet ist.

5. Fertigungszelle (10) nach Anspruch 1, **dadurch gekennzeichnet, dass** der letzten Bearbeitungsstation (60) im Materialfluss ein Entnahmeroboter (131) nachgeschaltet ist.

6. Fertigungszelle (10) nach Anspruch 1, **dadurch gekennzeichnet, dass** der ersten Bearbeitungsstation (40) im Materialfluss eine Messstation (24) vorgeschaltet ist.

7. Fertigungszelle (10) nach Anspruch 1, **dadurch gekennzeichnet, dass** sie eine Werkstückrückführung (32) umfasst.

## Claims

1. A production cell (10) having at least one processing station (40; 60), which has a supporting device (41; 61) and a movable tool unit (53; 73), and having a workpiece transport device (80), which has a transport track (81), wherein the workpiece transport device (80) has at least one track-bound workpiece carriage (91), and wherein the workpiece transport device (80) has a return track (82), wherein
- the production cell (10) comprises at least one second processing station (60; 40), which has a second supporting device (61; 41) and a second movable tool unit (73; 53),
- the first processing station (40) and the second processing station (60) are arranged in series in the material flow, and
- the transport track (81) rigidly couples the first processing station (40) and the second processing station (60),
- the production cell (10) has a rail-bearing body (11), which is oriented in the longitudinal direction (15) and on which a guiding grid (12), the transport track (81) and the return track (82) are arranged and at which the supporting devices (41, 61) are arranged,
**characterised**
- **in that** each supporting device (41; 61) has at least one fixing unit (46), which is displaceable normally to the longitudinal direction (15),
- **in that** the fixing unit (46) has two stop bars (48), which are oriented normally to the longitudinal direction (15) and parallel to the guiding grid (12) and delimit the side of the fixing unit (46) facing the transport rail (81) and are part of an adhesion region (62), and
- **in that** a plurality of extendable suction cups (49) are arranged in the adhesion region (62).

2. The production cell (10) according to Claim 1, **characterised in that** the processing stations (40, 60) are coupled to one another without buffers.

3. The production cell (10) according to Claim 1, **characterised in that** each tool unit (53; 73) is part of a processing robot (51; 71).

4. The production cell (10) according to Claim 1, **characterised in that** a loading robot (123) is arranged upstream of the first processing station (40) in the material flow.

5. The production cell (10) according to Claim 1, **characterised in that** a removal robot (131) is arranged downstream of the last processing station (60) in the material flow.

6. The production cell (10) according to Claim 1, **characterised in that** a measurement station (24) is arranged upstream of the first processing station (40) in the material flow.

7. The production cell (10) according to Claim 1, **characterised in that** it comprises a workpiece return (32).

## Revendications

1. Cellule de fabrication (10), pourvue d'au moins un poste d'usinage (40 ; 60) comportant un dispositif de support (41 ; 61) et une unité d'outils (53 ; 73) mobile et pourvue d'un dispositif de transport (80) de pièces à usiner comportant un rail de transport (81), le dispositif de transport (80) de pièces à usiner comportant au moins un chariot porte-pièces (91) sur rail et le dispositif de transport (80) de pièces à usiner étant doté d'un rail de retour (82),
- la cellule de fabrication (10) comprenant au moins un deuxième poste d'usinage (60 ; 40) comportant un deuxième dispositif de support (61 ; 41) et une deuxième unité d'outils (73 ; 53) mobile,
- le premier poste d'usinage (40) et le deuxième poste d'usinage (60) étant placés en rangée dans le flux de matières et
- le rail de transport (81) accouplant de manière rigide le premier poste d'usinage (40) et le deuxième poste d'usinage (60),
- la cellule de fabrication (10) étant dotée d'un corps porteur (11) de rail, orienté dans la direction longitudinale (15), sur lequel sont placés une grille de guidage (12), le rail de transport (81) et le rail de retour (82) et sur lequel sont placés les dispositifs de support (41, 61),
**caractérisée**
- **en ce que** chaque dispositif de support (41 ; 61) comporte au moins une unité de fixation (46), déplaçable à la normale par rapport à la direction longitudinale (15),
- **en ce que** l'unité de fixation (46) est dotée de deux barres de butée (48), orientées à la normale par rapport à la direction longitudinale (15) et à la parallèle de la grille de guidage (12), qui délimitent le côté faisant face au rail de transport (81) de l'unité de fixation (46) et qui sont une partie d'une zone d'adhérence (62) et
- **en ce que** dans la zone d'adhérence (62) sont placées une pluralité de ventouses (49) déployables.

2. Cellule de fabrication (10) selon la revendication 1, **caractérisée en ce que** les postes d'usinage (40, 60) sont accouplés les uns avec les autres sans zone tampon.

3. Cellule de fabrication (10) selon la revendication 1, **caractérisée en ce que** chaque unité d'outils (53 ; 73) est une partie d'un robot d'usinage (51 ; 71).

4. Cellule de fabrication (10) selon la revendication 1, **caractérisée en ce qu'**en amont du premier poste d'usinage (40) dans le flux de matière est monté un robot de chargement (123).

5. Cellule de fabrication (10) selon la revendication 1, **caractérisée en ce qu'**en aval du dernier poste d'usinage (60) dans le flux de matière est placé un robot de prélèvement (131).

6. Cellule de fabrication (10) selon la revendication 1, **caractérisée en ce qu'**en amont du premier poste d'usinage (40) dans le flux de matière est placé un poste de mesure (24).

7. Cellule de fabrication (10) selon la revendication 1, **caractérisée en ce qu'**elle comprend un retour (32) des pièces à usiner.
